# EUROPÄISCHE PATENTSCHRIFT

(11) **EP 0 942 852 B1**
(45) Veröffentlichungstag und Bekanntmachung des Hinweises auf die Patenterteilung: **03.12.2003**
(21) Anmeldenummer: 98958850.4
(22) Anmeldetag: 15.10.1998
(51) Int. Cl.: B60R 21/20

(54) **GASSACKMODUL**
AIRBAG MODULE
MODULE AIRBAG

(30) Priorität: 15.10.1997 DE 29718305 U
(43) Veröffentlichungstag der Anmeldung: 22.09.1999
(73) Patentinhaber: TRW Occupant Restraint Systems GmbH & Co. KG, 73551 Alfdorf (DE)
(72) Erfinder: FISCHER, Anton, D-73579 Leinweiler (DE); SEITZ, Martin, D-73527 Schwäbisch Gmünd (DE); WISSLICEN, Gitta, D-73525 Schwäbisch Gmünd (DE)
(74) Vertreter: Kitzhofer, Thomas, Dipl.-Ing.
(86) Internationale Anmeldenummer: EP9806559
(87) Internationale Veröffentlichungsnummer: WO99019174

(56) Entgegenhaltungen:
- EP-A- 0 855 316
- DE-A- 19 647 679
- DE-U- 29 711 114
- GB-A- 2 278 812

## Beschreibung

Die Erfindung betrifft ein Gassackmodul, insbesondere zum Kopfschutz bei einem Seitenaufprall, mit einem langgestreckten Aufnahmegehäuse, das zwei gegenüberliegende, voneinander beabstandet verlaufende Seitenwände und einen die Seitenwände verbindenden Steg hat, und mit einem im Aufnahmegehäuse gefaltet untergebrachten Gassack.

Die gattungsgemäße DE 19647679 A zeigt ein solches Gassackmodul.

Ein Gassackmodul, insbesondere ein Seitengassackmodul, das am Dachrahmen des Fahrzeugs befestigt ist, hat ein Aufnahmegehäuse, das mehrere Funktionen erfüllen muß. Zum einen soll es den gefaltenen Gassack beherbergen und schützen, zum anderen soll das Aufnahmegehäuse ein definiertes Entfalten bei einem Fahrzeugunfall zulassen. Hierzu sind voneinander beabstandet verlaufende Seitenwände vorgesehen, die einen sogenannten Schußkanal definieren. Der Gassack, der gegebenenfalls im Schußkanal selbst untergebracht ist, entfaltet sich längs des Schußkanals oder, umgekehrt der Schußkanal gibt die Entfaltungsrichtung zumindest zu Beginn des Entfaltungsvorgangs vor. Es ist deshalb wichtig, daß der Schußkanal eine definierte Form während des Entfaltens aufweist. Im übrigen soll das Aufnahmegehäuse auch eine möglichst vorherbestimmbare Geometrie in vormontiertem Zustand haben, damit keine Probleme bei der Montage des Gassackmoduls im Fahrzeug aufgrund von ständig wechselnden Abmessungen bei nacheinander zu verbauenden Gassackmodulen auftreten. Es sind Aufnahmebehälter für sogenannte Kopf-Seitengassäcke, die sich vorhangähnlich vor die Seitenscheiben schieben, bekannt. Diese haben ein im wesentlichen U-förmiges Aufnahmegehäuse, das an den Dachrahmen angeschraubt wird. Am offenen Ende des "U" ist eine Klappe vorgesehen, die sich beim Entfaltungsvorgang öffnet und den Austritt des Gassacks erlaubt. Das Aufnahmegehäuse weitet sich beim Entfalten des Gassacks, so daß der Schußkanal keine exakt vorbestimmbare Breite aufweist.

Die Erfindung schafft ein Gassackmodul, insbesondere zum Kopfschutz bei einem Seitenaufprall im Kopfbereich, das ein in seinen Abmaßen auch beim Entfalten des Gassacks exakt vorbestimmbaren Schußkanal zwischen den Seitenwänden aufweist. Dies wird bei einem Gassackmodul der eingangs genannten Art durch wenigstens einen von dem Steg beabstandeten Distanzhalter erreicht, der sich zwischen den Seitenwänden erstreckt und diese miteinander so verbindet, daß ein Auseinanderbewegen der Seitenwände bei geöffnetem Aufnahmegehäuse und dann Entfalten des Gassacks zumindest weitgehend vermieden wird. Der Distanzhalter ist beim erfindungsgemäßen Gassackmodul auch noch beim Entfaltungsvorgang vorhanden. Bei einem Aufnahmegehäuse nur mit Klappen hingegen dienen diese nicht mehr dem Zusammenhalten der Seitenwände nach dem Öffnen der Klappen.

Gemäß der bevorzugten Ausführungsform sind die Distanzhalter noch vor dem Befestigen des Moduls am Fahrzeug dazu vorgesehen, ein Auseinanderbewegen zu verhindern. Dies bedeutet z. B., daß das Befestigungsmittel zum Arretieren des Moduls am Fahrzeug nicht Teil des Distanzhalters sein muß oder der Lagefixierung der Seitenwände zueinander dienen muß. Hierzu ist der Distanzhalter an jedem seiner beiden axialen Enden mit einem Bund versehen, mit dem er außenseitig an der zugeordneten Seitenwand anliegt.

Der Distanzhalter kann an den Seitenwänden oder an nur einer Seitenwand angeformt sein oder vorzugsweise als separater, an dem Aufnahmegehäuse befestigbarer Körper ausgebildet sein. Dies ist insbesondere dann notwendig, wenn das Aufnahmegehäuse aus Kunststoff und die Haltekräfte beim Entfalten des Gassacks so groß sein müssen, daß die Distanzhalter aus Kunststoff diesen Beanspruchungen nicht gewachsen wären, so daß Distanzhalter aus Metall eingesetzt werden müssen.

Die bevorzugte Ausführungsform sieht vor, daß der Distanzhalter als Distanzhülse ausgebildet ist oder eine Distanzhülse umfaßt, durch die hindurch sich ein Befestigungsmittel zum Arretieren des Gassackmoduls am Fahrzeug erstreckt. Der Distanzhalter weist in diesem Fall zahlreiche Funktionen auf. Er dient der Lagefixierung der Seitenwände zueinander, er dient als Führung für das hindurchragende Befestigungsmittel bei der Montage, und er dient als Schutzhülle zwischen dem üblicherweise aus Metall bestehenden, scharfkantigen Befestigungsmittel und dem Gassack. Schließlich verhindert er ein Zusammendrücken des Aufnahmegehäuses beim Arretieren, üblicherweise Anschrauben des Aufnahmegehäuses am Fahrzeug. Wird nämlich das Aufnahmegehäuse an den Dachrahmen geschraubt, so könnte diese Schraube mehr oder weniger tief in den Dachrahmen eingedreht werden mit der Konsequenz, daß das Aufnahmegehäuse und der darin untergebrachte Gassack zusammengedrückt werden. Dies könnte den Entfaltungsvorgang deutlich verschlechtern. Durch die Distanzhülse ist jedoch ein axialer Anschlag für die Schraube gebildet.

Wenn das Aufnahmegehäuse entlang eines Teils des Dachrahmens des Fahrzeugs verläuft und in ihm ein Seitengassack untergebracht ist, der im entfalteten Zustand wenigstens einen Teil eines Fahrzeugseitenfensters abdeckt, sind vorzugsweise über die Länge des Aufnahmegehäuses mehrere Distanzhalter vorgesehen, die den Gassack durchdringen. Der Gassack ist im Bereich der Distanzhalter nach außen abgedichtet, damit keine Leckageströme austreten. Vorzugsweise sieht die Erfindung ein Gassackmodul vor, das längs des Dachrahmens verläuft, an diesem befestigt ist und sich von wenigstens seitlich des Fahrzeugfrontinsassen bis seitlich des Fahrzeugheckinsassen erstreckt, also einen sogenannten ABC-Gassack enthält.

Die Distanzhülsen können auch dazu dienen, die Befestigungsbolzen zum Anschrauben des Handgriffs am Dachrahmen unterzubringen. Diese Befestigungsbolzen dienen sowohl der Arretierung des Handgriffs als auch der des Gassackmoduls.

Darüber hinaus ist bei dieser Ausführungsform vorzugsweise ein Gaseinleitungsrohr im Aufnahmegehäuse untergebracht, welches zwischen den Seitenwänden, dem Steg und dem Distanzhalter vorgesehen ist. Der oder die Distanzhalter dienen damit der Lagefixierung des Gaseinleitungsrohres im vormontierten wie im am Fahrzeug arretierten Zustand des Gassackmoduls.

Eine einfache Montage des Gassackmoduls samt des Distanzhalters wird dadurch ermöglicht, daß der Distanzhalter aus mehreren Einzelteilen besteht, die axial ineinandergeschoben werden können und in montiertem Zustand durch eine Rastverbindung aneinander befestigt sind.

Wenn jedes Einzelteil einer Seitenwand zugeordnet ist und an ihr lösbar befestigt ist sowie in Richtung zum anderen Seitenteil ragt und mit seiner Stirnseite an diesem anderen Seitenteil anliegt, wird ein Aufeinanderzubewegen als auch ein Voneinanderwegbewegen der Seitenwände verhindert, denn jede Seitenwand ist zwischen Bund und Stirnseite geklemmt.

Jedes Einzelteil hat eine Aufnahmeöffnung in der ihr zugeordneten Seitenwand, durch die es von außen gesteckt wird. Die Lastverbindung ist zwischen den Seitenwänden an den Einzelteilen vorgesehen.

Weitere Merkmale und Vorteile der Erfindung ergeben sich aus der nachfolgenden Beschreibung und aus den nachfolgenden Zeichnungen, auf die Bezug genommen wird.
Figur 1 einen Fahrzeuginnenraum mit einem Kopf-Gassackmodul nach der Erfindung, welches am Dachrahmen arretiert ist und Fahrzeugfront- sowie Heckinsassen gleichermaßen schützt,
Figur 2 eine Querschnittsansicht durch das in der Figur 1 gezeigte Gassackmodul nach einer ersten Ausführungsform,
Figur 3 eine Querschnittsansicht durch das in Figur 1 gezeigte Gassackmodul nach einer zweiten Ausführungsform,
Figur 4 eine Seitenansicht eines als Stahlhülse ausgebildeten Distanzhalters, der eine dritte Ausführungsform kennzeichnet,
Figur 5 eine Ansicht der in Figur 4 gezeigten Stahlhülse in Pfeilrichtung,
Figur 6 eine Querschnittsansicht durch das in Figur 1 gezeigte Gassackmodul gemäß einer vierten Ausführungsform, wobei die Distanzhalter noch nicht zusammengebaut sind,
Figur 7 eine Schnittansicht längs der Linie VII-VII durch ein Einzelteil nach Figur 6, und
Figur 8 eine Schnittansicht längs der Linie VIII-VIII durch ein anderes Einzelteil nach Figur 6.

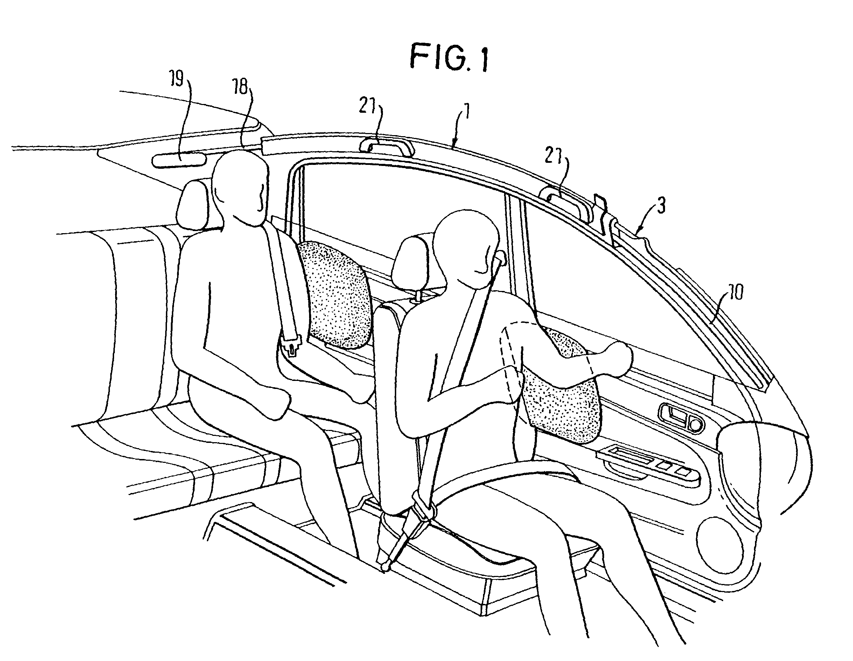

In Figur 1 ist ein Gassackmodul 1 dargestellt, welches an einem Dachrahmen 3 eines Fahrzeugs befestigt ist und eine langgestreckte, dem Dachrahmen folgende gekrümmte Form aufweist. Das Gassackmodul erstreckt sich im Fahrzeug zwischen der A- und der C-Säule. Es ist allerdings nicht erforderlich, die gesamte Fläche der Seitenscheiben zwischen der A- und C-Säule mit einem aufblasbaren Gassack, der Teil des Gassackmoduls ist, im Rückhaltefall abzudecken.

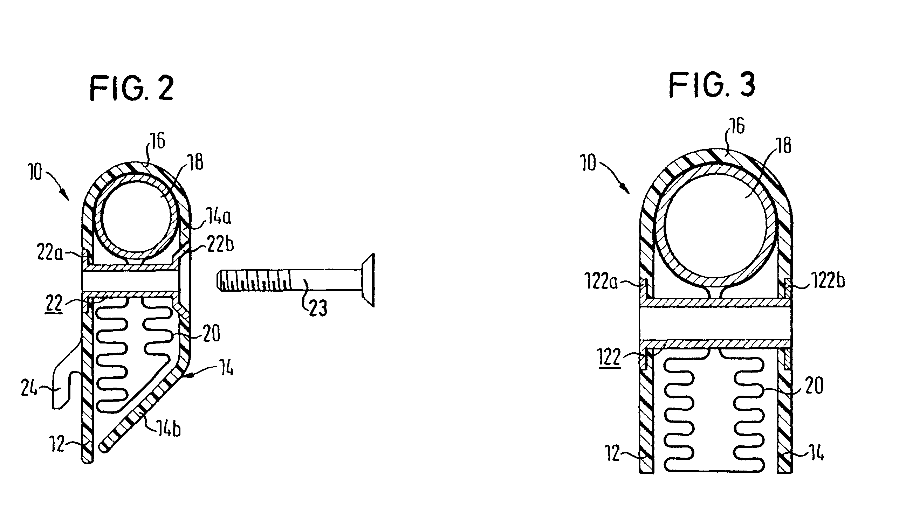

Wesentlicher Bestandteil des Moduls ist ein langgestrecktes Aufnahmegehäuse 10, das einen im wesentlichen U-förmigen Querschnitt aufweist. Einzelheiten der Querschnittsform des Aufnahmegehäuses 10 sind aus Figur 2 ersichtlich. Das Aufnahmegehäuse besteht aus einer ersten, flachen Seitenwand 12, einer zweiten, gegenüberliegenden Seitenwand 14, die aus einem ersten, flachen Streifen 14a und einem zweiten, daran anschließenden und abgewinkelten Streifen 14b besteht, und einem die beiden Seitenwände verbindenden Steg 16. Der Steg 16 ist gekrümmt und an die Außenkontur eines Gaseinleitungsrohres 18 angepaßt, das an der Innenseite des Steges 16 anliegt und über nahezu die gesamte Länge des Aufnahmegehäuses 10 verläuft. In Figur 1 ist der vordere Teil des Aufnahmegehäuses aufgeschnitten dargestellt, um das Gaseinleitungsrohr 18 sichtbar zu machen. Mit 19 ist ein im Bereich der C-Säule untergebrachter Gasgenerator bezeichnet, der Gas in das Rohr 18 einleitet. Der Streifen 14a verläuft parallel zu der Seitenwand 12, während der Streifen 14b schräg auf die freie Kante der Seitenwand 12 zu verläuft. Das Aufnahmegehäuse 10 wird vorzugsweise durch Spritzgießen aus einem thermoplastischen Kunststoff gefertigt. Dies gewährleistet bei leichter und rationeller Serienfertigung optimale mechanische Eigenschaften, insbesondere über einen weiten Temperaturbereich ein bezüglich Steifigkeit und elastischer Verformung reproduzierbares Verhalten.

Im Inneren des Aufnahmegehäuses 10 ist ein Seitengassack 20 in gefaltetem Zustand verstaut. In diesem Zustand wird der Gassack 20 durch den Streifen 14b der zweiten Gehäusewand 14 gehalten. Dieser bildet eine auslenkbare Verschlußklappe, deren Steifigkeit aber auch ohne unmittelbare Verbindung mit der gegenüberliegenden Seitenwand 12 gewährleistet, daß der gefaltete Gassack 20 umschlossen bleibt. Zwischen den Seitenwänden 12 und 14, genauer gesagt zwischen der Seitenwand 12, dem Streifen 14a und dem aufgeklappten Streifen 14b wird ein Schußkanal gebildet, der die Entfaltungsrichtung des Gassacks 20 zu Beginn des Entfaltungsvorgangs festlegt.

Für die Montage des Aufnahmegehäuses im Fahrzeug wird in vorteilhafter Weise von den ohnehin benötigten und vorhandenen Befestigungsmitteln für zwei Handgriffe 21 (vgl. Figur 1) Gebrauch gemacht. Die Handgriffe 21 werden üblicherweise durch Schraubbolzen 23 an dem Dachrahmen des Fahrzeugs befestigt. Um den Durchgang der Befestigungsmittel quer durch das Aufnahmegehäuse 10 zu ermöglichen, sind für jeden Handgriff zwei Distanzhülsen 22 vorgesehen, die das Aufnahmegehäuse 10 senkrecht zu der Seitenwand 12 und dem Streifen 14a durchqueren. Beide axialen Enden der Distanzhülse 22 haben einen Bund 22a bzw. 22b, mit dem sie außenseitig an der zugeordneten Seitenwand 12, 14 anliegen. Der Bund 22a wird durch Verstemmen des axialen Endes der Distanzhülse nach dem Durchführen durch eine Aufnahmeöffnung in dem Streifen 14a und der Seitenwand 12 erzeugt. Die Distanzhülse 22 bildet einen Abstandhalter, der die Axialkräfte in dem Schraubbolzen 23 aufnimmt, der durch diese Hülse geführt wird und zu der Befestigung des Aufnahmegehäuses 10 unter der Dachkante als auch der Befestigung der in Figur 1 gezeigten Handgriffe dient. Eine weitere Funktion der längs des Aufnahmegehäuses 10 vorgesehenen zahlreichen Distanzhülsen 22 besteht darin, das Gaseinleitungsrohr 18 in Anlage an der Innenfläche des gebogenen Steges 16 zu halten, dessen Form der des Gaseinleitungsrohres 18 angepaßt ist. Die Distanzhülsen 22 verhindern auch, daß sich die Seitenwände beim Entfalten des Gassacks aufgrund des Gassackdrucks auseinanderbewegen und somit dem Entfaltungsvorgang keine Richtung mehr vorgeben können.

Zur Erleichterung der Montage sind auf der Außenseite der Seitenwand 12 hakenförmige Einhängeelemente 24 angeformt.

Wie aus Figur 1 ersichtlich ist, erstreckt sich der Gassack im aktivierten, aufgeblasenen Zustand von der A-Säule über die B- bis zur C-Säule im Fahrzeug und vorwiegend in den Bereichen, in denen eine Gefährdung der vorderen und hinteren Fahrzeuginsassen im Kopfbereich bei einem Seitenaufprall gegeben ist. Die Länge des Aufnahmegehäuses 10 ist an die Längsausdehnung des Gassacks 20 angepaßt.

Der Gassack selbst hat im Bereich der Distanzhülsen 22 abgedichtete Ausnehmungen, so daß sich die Distanzhülsen 22 durch sie hindurch erstrecken können. Der Gassack 20 ist darüber hinaus an seinem oberen Rande um das Gaseinleitungsrohr 18 geschlungen und zwischen diesem und dem Steg 16 geklemmt.

Bei der in Figur 3 gezeigten Ausführungsform sind die im Vergleich zu Figur 2 einander entsprechenden Teile auch mit den bereits eingeführten Bezugszahlen versehen. Die Distanzhülse ist in diesem Fall jedoch aus mehreren Teilen zusammengesetzt, nämlich aus einer Hülse 122 mit einem Bund 122a und einem im Bereich der Seitenwand 14 auf das entsprechend Ende der Distanzhülse aufgesetzten und mit der Hülse 122 verbunden Scheibe 122b. Die Seitenwand 14 weist im Gegensatz zu der Ausführungsform nach Figur 2 keinen abgewinkelten Streifen 14b auf. Damit ist der Schußkanal durch die zwei parallelen Seitenwände 12 und 14 gebildet. Ebenso wie in der Ausführungsform nach Figur 2 bilden die Distanzhülsen 122 Distanzhalter zur Festlegung des Abstandes der Seitenwände 12, 14. Auch bei dieser Ausführungsform ist das Befestigungsmittel, wie z. B. eine Schraube von außen durch die Distanzhülse 122 steckbar. Im Gegensatz zu der Ausführungsform nach Figur 2 weist die Scheibe 122b jedoch keine Vertiefung zur Unterbringung des Kopfes der Befestigungsschraube auf.

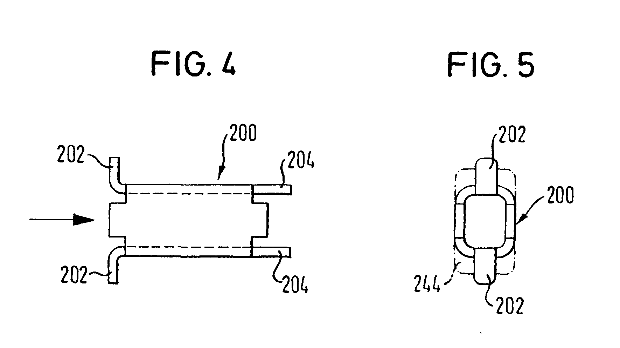

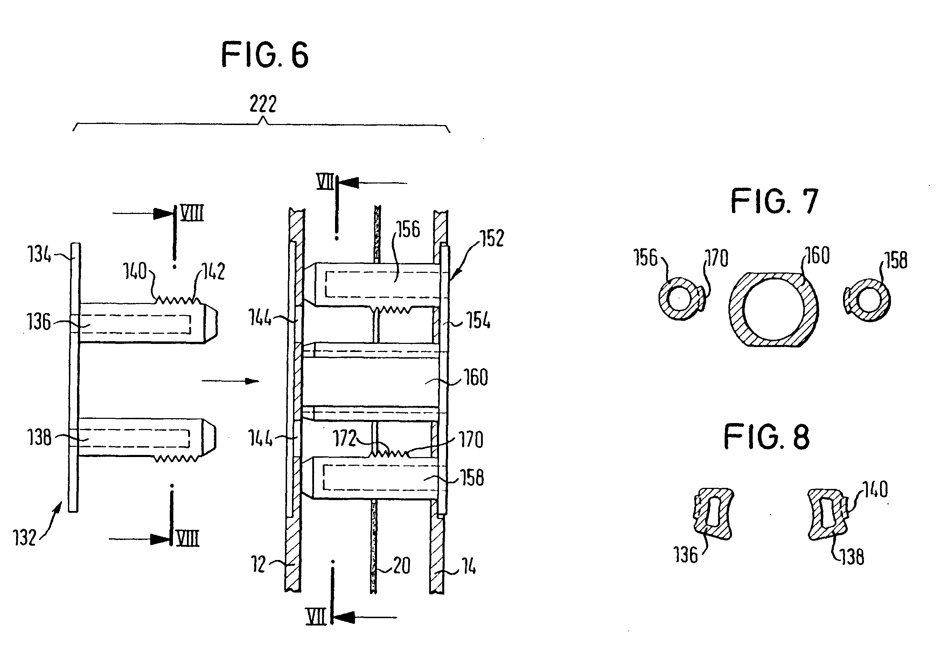

Bei der in Figur 4 gezeigten Ausführungsform ist die Distanzhülse 200 als einteilige Stahlhülse ausgebildet. Die Stahlhülse ist im Querschnitt nicht rund, sondern länglich, fast oval und aus einem Stanzteil gebogen. Die Distanzhülse hat an jedem axialen Ende zwei gegenüberliegende Lappen 202 und 204. Die Lappen 202 sind noch vor dem Einführen in die Aufnahmeöffnungen 244 (vgl. Fig. 5) in den Seitenwänden 12, 14 abgewinkelt, wogegen die Lappen 204 erst nach dem Einführen in die Aufnahmeöffnungen 244 abgewinkelt werden. Die Lappen 202 und 204 haben die Funktion des Bundes 22a bzw. des Bundes 22b nach Figur 2 oder des Bundes 122a bzw. der als Bund wirkenden Scheibe 122b. Sie stellen damit quasi einen nicht umfangsmäßig durchgehenden Bund dar. Die längliche Querschnittsform der Distanzhülse bietet den Vorteil, daß Abstandstoleranzen zwischen den Befestigungsöffnungen am Dachrahmen, die einige Millimeter von Öffnung zu Öffnung und Fahrzeug zu Fahrzeug betragen können, ausgeglichen werden können. Der Schraubbolzen 23 kann aufgrund der ovalen Querschnittsform in Längsrichtung des Aufnahmegehäuses 10 in der Distanzhülse 200 verschoben werden. Die Distanzhülse 22 wird dementsprechend so im Außengehäuse 10 montiert, daß ihre längeren Seitenwände in Längsrichtung des Außengehäuses, d.h. in Richtung des Dachrahmens verlaufen.

Darüber hinaus ist es auch möglich, daß die Aufnahmeöffnung 244 in jeder Seitenwand 12, 14 als Langloch ausgebildet ist, in der die Distanzhülse in gewissen Grenzen verschoben werden kann. Auch dies schafft eine Möglichkeit des Toleranzausgleichs. Dabei ist eine Kombination einer Aufnahmeöffnung in Form eines Langlochs mit jeder gezeigten Ausführungsform der Distanzhülse möglich. Ferner kann zur Schaffung eines Toleranzausgleichs auch ein deutliches Übermaß zwischen dem Außendurchmesser des Schraubbolzens 23 und dem engsten Innendurchmesser der Distanzhülse 22, 122 oder 200 vorgesehen sein.

Die Aufnahmeöffnung 244 muß aber kein Langloch sein. Wichtig ist zur Schaffung der Möglichkeit des Toleranzausgleichs lediglich, daß sie größer als der Außendurchmesser der Distanzhülse 200 ist, so daß sich die Distanzhülse 200 in einer durch die Aufnahmeöffnung 244 definierten Ebene, d. h. quer zu ihrer Längserstreckung, verschieben läßt und die Lappen 202 und 204 nach wie vor an den Außenseiten der Seitenwände 12 und 14 anliegen.

Die in den Figuren 6 bis 8 gezeigte Ausführungsform zeichnet sich durch eine noch einfachere Befestigung der Distanzhülse am Außengehäuse aus. Der Distanzhalter 222 besteht aus zwei Einzelteilen, die jeweils einer Seitenwand 12, 14 zugeordnet sind und die in dieser lösbar befestigt werden. Hierzu werden sie von außen in eine entsprechende Aufnahmeöffnung in der zugeordneten Seitenwand gesteckt. Das Einzelteil 232 hat eine dem Bund 22a in der Funktion entsprechende Platte 134, von der zwei Finger 136, 138 senkrecht und in axialer oder Fügerichtung (vgl. Pfeil) abstehen. Die Finger 136 und 138 sind ebenso wie die Platte 134 aus Kunststoff und darüber hinaus radial nachgiebig. Sie weisen an ihrer Außenseite in einem bestimmten Abschnitt Zähne 140 und Ausnehmungen 142, die zwischen zwei benachbarten Zähnen 140 liegen, auf. Diese Zähne 140 und Ausnehmungen 142 bilden einen Teil einer Rastverbindung. Die Seitenwand 12 hat nicht nur eine Vertiefung für die Aufnahme der Platte 134, sondern auch zwei Aufnahmeöffnungen 144, in die die Finger 136, 138 beim Einsetzen des Einzelteils 132 in Pfeilrichtung eingeführt werden. Das zweite Einzelteil, welches in Figur 6 bereits in entsprechende Öffnungen in der Seitenwand 14 eingesteckt dargestellt ist, trägt das Bezugszeichen 152. Dieses Einzelteil umfaßt ebenfalls eine Platte 154 sowie drei abstehende Finger, nämlich zwei radial elastisch nachgiebige äußere Finger 156 und 158 sowie einen mittleren hülsenförmigen Finger 160. Der hülsenförmige Finger 160 ist, wie in Figur 7 zu erkennen ist, hohl ausgebildet und bildet eine Distanzhülse zur Aufnahme einer Befestigungsschraube. Zwischen den Fingern 156 und 160 bzw. 158 und 160 sind Zwischenräume gebildet, in die die Finger 136, 138 beim axialen Ineinanderschieben der beiden Einzelteile 132 und 152 eindringen. Innenseitig weisen die Finger 156 auch aufeinanderfolgende Zähne und Ausnehmungen 170, 172 auf. Durch die Zähne 140, 170 und die Ausnehmungen 142, 172 wird eine Rastverbindung gebildet, die der Befestigung der Einzelteile 132 und 152 dient. Beim Einführen des Einzelteils 132 in Bewegungsrichtung geben die Finger 156, 158 radial nach außen nach, so daß die Verzahnungen auf den Fingern 136, 138, 156 und 158 ineinandergreifen können.

Wie in Figur 6 zu sehen ist, sind die Finger 156, 158 und 160 so lang, daß sie stirnseitig an der Innenseite der Stirnwand 12 anschlagen. Die Finger 136 und 138 sind nach dem Einführen in die Öffnungen 144 entsprechend lang, so daß sie stirnseitig an der Innenseite der Stirnwand 14 anliegen.

Damit sind die Stirnwände 12, 14 in beide Richtungen lagefixiert, denn der Distanzhalter 222 verhindert ein Zusammendrücken der Wände 12, 14 als auch ein Auseinanderbewegen derselben. Mittels der Rastverbindung können die Seitenwände 12, 14 auch beim vormontierten Gassackmodul durch den zusammengefalteten Gassack 20 nicht auseinandergedrückt werden. Die miteinander verbundenen Einzelteile 132, 152 können einem Auseinanderdrücken der Seitenwände 12, 14 nur eine gewisse maximale Kraft entgegensetzen. Diese Kraft hängt von der Art der Rastverbindung als auch von der Elastizität der Finger ab. Wenn diese Kraft beim Entfalten überschritten werden sollte, sind aber noch die Befestigungsschrauben vorhanden, die durch den hülsenförmigen Finger 160 ragen. Diese bilden für diesem Fall einen Teil des Distanzhalters 222 und stellen eine Art Sicherungsmittel dar.

Die in den Figuren 6 bis 8 gezeigte Ausführungsform zeichnet sich durch eine schnelle, einfache Art der Verbindung der Einzelteile beim Schließen des Aufnahmegehäuses 10 aus. Es muß kein plastisches Umformen nach dem Verbinden der Einzelteile 132, 152 mehr erfolgen.

## Patentansprüche

1. Gassackmodul, insbesondere zum Kopfschutz bei einem Seitenaufprall,
mit einem langgestreckten Aufnahmegehäuse (10), das zwei gegenüberliegende, voneinander beabstandet verlaufende Seitenwände (12, 14) und einen die Seitenwände (12, 14) verbindenden Steg (16) hat, und
mit einem im Aufnahmegehäuse (10) gefaltet untergebrachten Gassack (20),
**gekennzeichnet durch** wenigstens einen von dem Steg (16) beabstandeten Distanzhalter,
der sich zwischen den Seitenwänden (12, 14) erstreckt und diese miteinander so verbindet, daß ein Auseinanderbewegen der Seitenwände (12, 14) bei geöffnetem Aufnahmegehäuse (10) und beim Entfalten des Gassacks (20) zumindest weitgehend vermieden wird.

2. Gassackmodul nach Anspruch 1, **dadurch gekennzeichnet, daß** der Distanzhalter (222) vor dem Befestigen des Moduls am Fahrzeug die Seitenwände an einem Auseinanderbewegen hindert.

3. Gassackmodul nach Anspruch 2, **dadurch gekennzeichnet, daß** jede Seitenwand (12, 14) eine Außen- und eine Innenseite aufweist und der Distanzhalter an jedem seiner axialen Enden einen Bund aufweist, mit dem er außenseitig an der zugeordneten Seitenwand (12, 14) anliegt.

4. Gassackmodul nach einem der vorhergehenden Ansprüche, **dadurch gekennzeichnet, daß** der Distanzhalter (222) als gegenüber dem Aufnahmegehäuse (10) separater, an dem Aufnahmegehäuse (10) befestigbarer Körper ausgebildet ist.

5. Gassackmodul nach einem der vorhergehenden Ansprüche, **dadurch gekennzeichnet, daß** der Distanzhalter eine Distanzhülse (22; 122; 200) umfaßt, durch die hindurch sich ein Befestigungsmittel zum Arretieren des Gassackmoduls am Fahrzeug erstreckt.

6. Gassackmodul nach Anspruch 5, **dadurch gekennzeichnet, daß** das Befestigungsmittel von einer Seitenwand aus durch die Distanzhülse (22; 122; 200) gesteckt werden kann.

7. Gassackmodul nach Anspruch 5 oder 6, **dadurch gekennzeichnet, daß** die Distanzhülse (200) einen länglichen Querschnitt aufweist.

8. Gassackmodul nach einem der vorhergehenden Ansprüche, **dadurch gekennzeichnet, daß** in den Seitenwänden (12, 14) eine Aufnahmeöffnung (244) vorgesehen ist, in die der Distanzhalter gesteckt werden kann, und daß sich der Distanzhalter in der Aufnahmeöffnung (244) zum Ausgleich von Lagetoleranzen in der Ebene der Aufnahmeöffnung (244) verschieben läßt.

9. Gassackmodul nach einem der vorhergehenden Ansprüche, **dadurch gekennzeichnet, daß** sich das Aufnahmegehäuse (10) entlang eines Teils des Dachrahmens des Fahrzeugs erstreckt und in ihm ein Seitengassack untergebracht ist, der im entfalteten Zustand wenigstens einen Teil eines Fahrzeugseitenfensters abdeckt, wobei über die Länge des Aufnahmegehäuses mehrere Distanzhalter (222) vorgesehen sind, die den Gassack (20) durchdringen.

10. Gassackmodul nach Anspruch 9, **dadurch gekennzeichnet, daß** das Gassackmodul längs des Dachrahmens des Fahrzeugs verläuft, an diesem befestigt ist und sich von wenigstens seitlich des Fahrzeugfrontinsassen bis seitlich des Fahrzeugheckinsassen erstreckt.

11. Gassackmodul nach einem der Ansprüche 5 bis 8 sowie zusätzlich nach Anspruch 9 oder 10, **dadurch gekennzeichnet, daß** die Distanzhalter Distanzhülsen (22; 122; 200) umfassen und sich durch zwei Distanzhülsen (22; 122; 200) im arretierten Zustand des Gassackmoduls im Fahrzeug Handgriff-Befestigungsbolzen erstrecken.

12. Gassackmodul nach einem der Ansprüche 9 bis 11, **dadurch gekennzeichnet, daß** im Aufnahmegehäuse (10) ein der Längserstreckung des Aufnahmegehäuses folgendes Gaseinleitungsrohr untergebracht ist, welches zwischen den Seitenwänden (12, 14), dem Steg (16) und dem Distanzhalter (222) vorgesehen ist und welches im Inneren des Gassacks (20) verläuft.

13. Gassackmodul nach einem der vorhergehenden Ansprüche, **dadurch gekennzeichnet, daß** der Distanzhalter (222) mehrere Einzelteile (132, 152) aufweist, die axial ineinandergeschoben werden können und in montiertem Zustand durch eine Rastverbindung aneinander befestigt sind.

14. Gassackmodul nach Anspruch 13, **dadurch gekennzeichnet, daß** jedes Einzelteil (132, 152) einer Seitenwand (12, 14) zugeordnet und an ihr befestigt ist sowie in Richtung zur anderen Seitenwand (12, 14) ragt und stirnseitig an dieser anliegt.

15. Gassackmodul nach Anspruch 13 oder 14, **dadurch gekennzeichnet, daß** sich jedes Einzelteil (132, 152) durch eine Aufnahmeöffnung (144) in der ihr zugeordneten Seitenwand (12, 14) erstreckt, durch die es von außen gesteckt wird, und daß die Rastverbindung zwischen den Seitenwänden (12, 14) an den Einzelteilen (132, 152) vorgesehen ist.

16. Gassackmodul nach einem der Ansprüche 13 bis 15, **dadurch gekennzeichnet, daß** die Einzelteile (132, 152) sich in Richtung zur gegenüberliegenden Seitenwand (12, 14) erstrecken und in radialer Richtung elastisch nachgiebige Finger (136, 138, 156, 158, 160) mit Zähnen (140, 170) und Ausnehmungen (142, 172) haben, wobei die Zähne und Ausnehmungen die Rastverbindung bilden.

17. Gassackmodul nach Anspruch 16, **dadurch gekennzeichnet, daß** einer der Finger (160) als Hülse ausgebildet ist, durch die von außen ein Befestigungsmittel zum Arretieren des Gassackmoduls am Fahrzeug gesteckt werden kann.

18. Gassackmodul nach Anspruch 17, **dadurch gekennzeichnet, daß** an dem Einzelteil, das den hülsenförmigen Finger (160) aufweist, weitere Finger (156, 158) angeformt sind und zwischen diesen und dem hülsenförmigen Finger (160) Finger (136, 138) des anderen Einzelteils geklemmt sind.

## Claims

1. A gas bag module, in particular for head protection in case of a side impact,
with an elongated mounting housing (10), which has two opposing side walls (12, 14) extending spaced apart from each other and has a cross-piece (16) connecting the side walls (12, 14), and
with a gas bag (20) accommodated in the folded state in the mounting housing (10),
**characterized by** at least one spacer spaced apart from the cross-piece (16),
which spacer extends between the side walls (12, 14) and connects them with each other such that a moving apart of the side walls (12, 14) is at least largely avoided when the mounting housing (10) is open and the gas bag (20) unfolds.

2. The gas bag module according to Claim 1, **characterized in that** before the module is fastened to the vehicle, the spacer (222) prevents the side walls from moving apart.

3. The gas bag module according to Claim 2, **characterized in that** each side wall (12, 14) has an outer and an inner face and the spacer has on each of its axial ends a collar by which it lies externally against the associated side wall (12, 14).

4. The gas bag module according to any of the preceding claims, **characterized in that** the spacer (222) is constructed as a body which is separate with respect to the mounting housing (10) and is able to be fastened to the mounting housing (10).

5. The gas bag module according to any of the preceding claims, **characterized in that** the spacer comprises a spacer sleeve (22; 122; 200) through which a fastening means extends for arresting the gas bag module at the vehicle.

6. The gas bag module according to Claim 5, **characterized in that** the fastening means can be inserted from a side wall through the spacer sleeve (22; 122; 200).

7. The gas bag module according to Claim 5 or 6, **characterized in that** the spacer sleeve (200) has an elongated cross-section.

8. The gas bag module according to any of the preceding claims, **characterized in that** in the side walls (12, 14) a mounting opening (244) is provided, into which the spacer can be inserted, and that the spacer can be displaced in the mounting opening (244) to balance out positional tolerances in the plane of the mounting opening (244).

9. The gas bag module according to any of the preceding claims, **characterized in that** the mounting housing (10) extends along part of the roof frame of the vehicle and in it a side gas bag is accommodated, which in the unfolded state covers at least part of a vehicle side window, several spacers (222) being provided over the length of the mounting housing, which penetrate the gas bag (20).

10. The gas bag module according to Claim 9, **characterized in that** the gas bag module runs along the roof frame of the vehicle, is fastened thereto and extends from at least laterally of the vehicle front occupant to laterally of the vehicle rear occupant.

11. The gas bag module according to any of Claims 5 to 8 and in addition according to Claim 9 or 10, **characterized in that** the spacers comprise spacer sleeves (22; 122; 200) and that handle fastening bolts extend through two spacer sleeves (22; 122; 200) in the arrested state of the gas bag module in the vehicle.

12. The gas bag module according to any of Claims 9 to 11, **characterized in that** in the mounting housing (10) a gas inlet pipe is accommodated following the longitudinal extent of the mounting housing, which pipe is provided between the side walls (12, 14), the cross-piece (16) and the spacer (222) and runs inside the gas bag (20).

13. The gas bag module according to any of the preceding claims, **characterized in that** the spacer (222) has several individual parts (132, 152) which can be pushed axially into each other and in the mounted state are fastened to each other by a detent connection.

14. The gas bag module according to Claim 13, **characterized in that** each individual part (132, 152) is associated with a side wall (12, 14) and is fastened to it and projects towards the other side wall (12, 14) and lies against it on the end face.

15. The gas bag module according to Claim 13 or 14, **characterized in that** each individual part (132, 152) extends through a mounting opening (144) in the side wall (12, 14) associated therewith, through which it is inserted from the exterior, and that the detent connection is provided between the side walls (12, 14) on the individual parts (132, 152).

16. The gas bag module according to any of Claims 13 to 15, **characterized in that** the individual parts (132, 152) extend towards the opposite side wall (12, 14) and have elastically flexible fingers (136, 138, 156, 158, 160) in the radial direction with teeth (140, 170) and recesses (142, 172), the teeth and recesses forming the detent connection.

17. The gas bag module according to Claim 16, **characterized in that** one of the fingers (160) is constructed as a sleeve through which a fastening means can be inserted from the exterior for arresting the gas bag module at the vehicle.

18. The gas bag module according to Claim 17, **characterized in that** further fingers (156, 158) are formed integrally with the individual part which has the sleeve-shaped finger (160), and fingers (136, 138) of the other individual part are clamped between the fingers (156, 158) and the sleeve-shaped finger (160).

## Revendications

1. Module de coussin à gaz, en particulier pour la protection de la tête lors d'un impact latéral,
comportant un boîtier de réception (10) allongé qui possède deux parois latérales (12, 14) opposées, s'étendant à distance l'une de l'autre, et une traverse (16) reliant les parois latérales (12, 14), et
comportant un coussin à gaz (20) logé plié dans le boîtier de réception (10),
**caractérisé par** au moins un espaceur situé à distance de la traverse (16),
lequel s'étend entre les parois latérales (12, 14) et relie celles-ci de telle sorte qu'il est au moins amplement évité que les parois latérales (12, 14) s'écartent l'une de l'autre lorsque le boîtier de réception (10) est ouvert et lorsque le coussin à gaz (20) se déploie.

2. Module de coussin à gaz selon la revendication 1, **caractérisé en ce que** l'espaceur (222) empêche que les parois latérales ne s'écartent l'une de l'autre avant de fixer le module sur le véhicule.

3. Module de coussin à gaz selon la revendication 2, **caractérisé en ce que** chaque paroi latérale (12, 14) présente une face extérieure et une face intérieure, et l'espaceur présente sur chacune de ses extrémités axiales une collerette par laquelle il est en appui sur la face extérieure de la paroi latérale (12, 14) associée.

4. Module de coussin à gaz selon l'une des revendications précédentes, **caractérisé en ce que** l'espaceur (222) est réalisé sous forme de corps séparé, par rapport au boîtier de réception (10) et susceptible d'être fixé sur le boîtier de réception (10).

5. Module de coussin à gaz selon l'une des revendications précédentes, **caractérisé en ce que** l'espaceur comprend une douille d'écartement (22 ; 122 ; 200) à travers laquelle s'étend un moyen de fixation pour bloquer le module à coussin à gaz sur le véhicule.

6. Module de coussin à gaz selon la revendication 5, **caractérisé en ce que** le moyen de fixation peut être introduit depuis une paroi latérale à travers la douille d'écartement (22 ; 122 ; 200).

7. Module de coussin à gaz selon la revendication 5 ou 6, **caractérisé en ce que** la douille d'écartement (200) présente une section longitudinale allongée.

8. Module de coussin à gaz selon l'une des revendications précédentes, **caractérisé en ce que** dans les parois latérales (12, 14) est prévue une ouverture de réception (244) dans laquelle peut être introduit l'espaceur, et **en ce que** l'espaceur peut être déplacé dans l'ouverture de réception (244) pour compenser des tolérances de position dans le plan de l'ouverture de réception (244).

9. Module de coussin à gaz selon l'une des revendications précédentes, **caractérisé en ce que** le boîtier de réception (10) s'étend le long d'une partie du cadre de toit du véhicule et **en ce que** dans ledit boîtier est logé un coussin à gaz latéral qui, à l'état déployé, recouvre au moins une partie d'une fenêtre latérale du véhicule, plusieurs espaceurs (222) étant prévus sur la longueur du boîtier de réception, lesquels pénètrent dans le coussin à gaz (20).

10. Module de coussin à gaz selon la revendication 9, **caractérisé en ce que** le module de coussin à gaz s'étend le long du cadre de toit du véhicule, est fixé sur celui-ci et s'étend depuis au moins à côté du passager à l'avant du véhicule jusqu'à côté du passager à l'arrière du véhicule.

11. Module de coussin à gaz selon l'une des revendications 5 à 8, ainsi qu'additionnellement selon les revendications 9 ou 10, **caractérisé en ce que** les espaceurs comprennent des douilles d'écartement (22 ; 122 ; 200) et **en ce que** des boulons de fixation de poignée s'étendent à travers deux douilles d'écartement (22 ; 122 ; 200) à l'état bloqué du module de coussin à gaz dans le véhicule.

12. Module de coussin à gaz selon l'une des revendications 9 à 11, **caractérisé en ce que** dans le boîtier de réception (10) est logé un tube d'introduction de gaz suivant l'extension longitudinale du boîtier de réception, lequel tube est prévu entre les parois latérales (12, 14), la traverse (16) et l'espaceur (222) et s'étend à l'intérieur du coussin à gaz (20).

13. Module de coussin à gaz selon l'une des revendications précédentes, **caractérisé en ce que** l'espaceur (222) présente plusieurs éléments individuels (132, 152) qui peuvent être insérés axialement les uns dans les autres et qui, à l'état de montage, sont fixés les uns aux autres par enclenchement.

14. Module de coussin à gaz selon la revendication 13, **caractérisé en ce que** chaque élément individuel (132, 152) est associé à une paroi latérale (12, 14) et fixée à celle-ci et fait saillie en direction de l'autre paroi latérale (12, 14) et est en appui sur la face frontale de celle-ci.

15. Module de coussin à gaz selon la revendication 13 ou 14, **caractérisé en ce que** chaque élément individuel (132, 152) s'étend à travers une ouverture de réception (144) dans la paroi (12, 14) qui lui est associée et à travers laquelle il est introduit depuis l'extérieur, et **en ce que** la liaison par enclenchement est prévue sur les éléments individuels (132, 152) entre les parois latérales.

16. Module de coussin à gaz selon l'une des revendications 13 à 15, **caractérisé en ce que** les éléments individuels (132, 152) s'étendent en direction de la paroi latérale (12, 14) opposée et **en ce qu'**ils possèdent en direction radiale des doigts (136, 138, 156, 160) élastiquement flexibles avec des dents (140, 170) et des évidements (142, 172), les dents et les évidements formant une liaison par enclenchement.

17. Module de coussin à gaz selon la revendication 16, **caractérisé en ce que** l'un des doigts (160) est réalisé sous forme de douille à travers laquelle un moyen de fixation peut être introduit pour bloquer le module de coussin à gaz sur le véhicule.

18. Module de coussin à gaz selon la revendication 17, **caractérisé en ce que** sur l'élément individuel, qui présente le doigt (160) en forme de douille, sont formés d'autres doigts (156, 158) et **en ce qu'**entre ceux-ci sont serrés les doigts (136, 138) de l'autre élément individuel.
